# DEMANDE DE BREVET EUROPEEN

(11) **EP 0 944 273 A1**
(43) Date de publication de la demande: **22.09.1999**
(21) Numéro de dépôt: 99200782.3
(22) Date de dépôt: 11.03.1999
(51) Int. Cl.: H04Q 7/32, H04B 1/16, H04M 1/72

(54) **Procédé et dispositif d'economie d'energie et equipment electronique embarque**

(30) Priorité: 20.03.1998 FR 9803469
(71) Demandeur: Koninklijke Philips Electronics N.V., 5621 BA Eindhoven (NL)
(72) Inventeur: Pichard, Yann, 75008 Paris (FR)
(74) Mandataire: Chaffraix, Jean

(57) **Abrégé**

L'invention concerne un procédé d'économie d'énergie pouvant avantageusement être mis en oeuvre dans une application temps réel embarquée. Une telle application comporte des périodes d'endormissement et de réveil pour limiter la consommation d'énergie lorsque l'application est inactive. Un but de l'invention est d'éviter les réveils intempestifs dus à des temporisations ou des interruptions en synchronisant l'expiration des temporisations de façon à diminuer le nombre de réveils.

Application : radiotéléphones et appareils électroniques embarqués.

## Description

L'invention concerne un procédé d'économie d'énergie dans un système électronique alimenté par un accumulateur, ledit système ayant des périodes d'activité et d'inactivité successives, le procédé comprenant :
- une étape de temporisation pour armer des temporisations ayant des dates d'expiration déterminées,
- une étape d'endormissement pour couper l'alimentation du système pendant une période d'inactivité,
- une étape de réveil déclenchée par l'expiration de chaque temporisation pour alimenter à nouveau ledit système pendant une période d'activité.

L'invention concerne également un dispositif d'économie d'énergie pour réduire l'énergie d'alimentation consommée par un système électronique ayant des périodes d'activité et d'inactivité successives, le dispositif comportant :
- des moyens de temporisation pour armer des temporisations ayant des dates d'expiration déterminées,
- des moyens d'endormissement pour couper ladite alimentation pendant une période d'inactivité,
- des moyens de réveil déclenchés par l'expiration de chaque temporisation pour alimenter à nouveau ledit système pendant une période d'activité.

Elle concerne enfin un équipement électronique embarqué comprenant un système électronique ayant au moins une première activité à forte contrainte temps réel et une deuxième activité à moins forte contrainte temps réel et un dispositif d'économie d'énergie tel que décrit ci-dessus.

L'invention s'applique notamment aux radiotéléphones mobiles alimentés par des batteries rechargeables.

Le brevet américain n° 5 596 315 publié le 21 janvier 1997 décrit un récepteur d'appels radioélectriques et un procédé mis en oeuvre par le récepteur pour exécuter des cycles d'endormissement et des cycles de réveil dans le but d'économiser l'énergie de la batterie d'alimentation du récepteur.

Un objet de la présente invention est d'optimiser ces économies d'énergie pour augmenter la durée de fonctionnement de la batterie.

Pour cela, un procédé du genre mentionné dans le préambule est remarquable en ce que l'on affecte une indication de précision auxdites temporisations et en ce que lesdites dates d'expiration sont déterminées par une étape de synchronisation pour synchroniser l'expiration des temporisations en fonction desdites indications de précision.

De même, un dispositif de genre mentionné dans le préambule est remarquable en ce qu'il comporte en outre :
- des moyens d'affectation coopérant avec les moyens de temporisation pour affecter une indication de précision auxdites temporisations,
- des moyens de synchronisation desdites dates d'expiration pour synchroniser l'expiration des temporisations en fonction desdites indications de précision.

Ces mesures permettent d'augmenter la longueur des cycles d'endormissement et d'éviter ainsi des réveils intempestifs dus à l'expiration de temporisations associées à des activités non soumises à de fortes contraintes temps réel. En revanche, l'invention prévoit d'affecter des plages de temps réduites voire nulles aux temporisations associées à des activités ayant une forte contrainte temps réel. C'est le cas par exemple des activités liées aux protocoles de communications utilisés par l'interface radioélectrique des équipements de radiocommunications.

En effet les protocoles de communications radioélectriques, et en particulier les protocoles normalisés du type GSM exigent une parfaite synchronisation de l'émission / réception des messages de signalisation sur le canal radioélectrique pour écouter les informations envoyées par le réseau. Les périodes de réveil et d'endormissement liées à l'activité radio sont donc parfaitement prévisibles. En revanche, certaines activités comme les taches de gestion de l'interface utilisateur ou de la batterie n'ont pas besoin d'être traitées avec une si grande précision temporelle. C'est pourquoi l'invention prévoit que les réveils demandés par des activités à faible contrainte temps réel soit synchronisés sur les réveils demandés par les activités à forte contrainte temps réel.

La description suivante, faite en regard des dessins ci-annexés, le tout donné à titre d'exemple non limitatif fera bien comprendre comment l'invention peut être réalisée.

La figure 1 représente un procédé d'économie d'énergie selon l'invention.

La figure 2 représente un exemple de réalisation du procédé de la figure 1.

La figure 3 représente un dispositif d'économie d'énergie selon l'invention.

La figure 4 représente un équipement électronique embarqué selon l'invention.

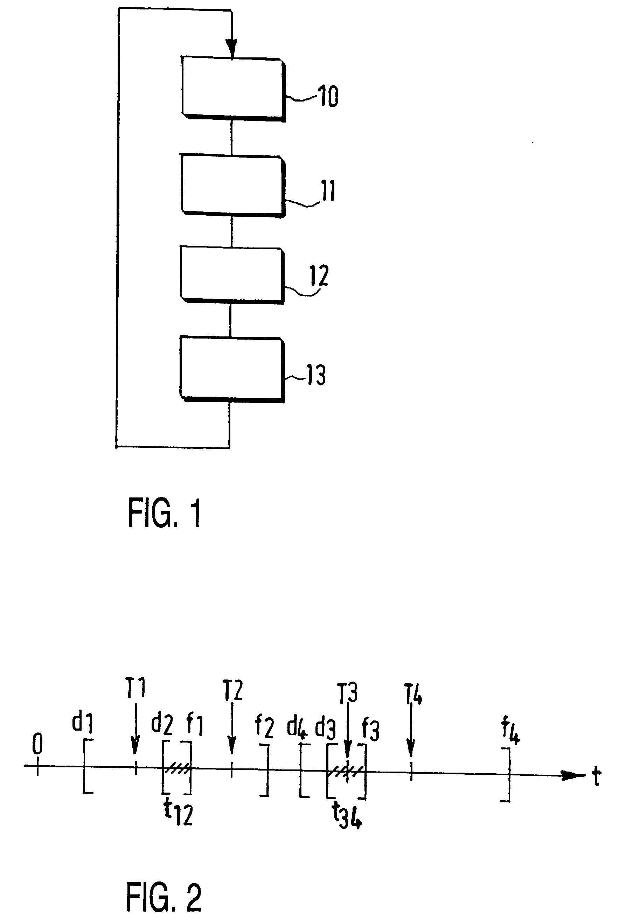

Le procédé schématisé à la figure 1 se décompose en plusieurs étapes successives représentées par les blocs 10 à 13. Il peut être implémenté dans tout appareil électronique comportant un système d'applications embarqué alimenté par une batterie d'accumulation rechargeable ou interchangeable.

Le but du procédé est de réaliser des économies d'énergie en « endormant » le système, c'est-à-dire en coupant son alimentation lorsqu'il est inactif, et en le « réveillant », c'est-à-dire en le reconnectant à son alimentation, le moins souvent possible pour exécuter une fonction qui ne peut pas attendre (c'est-à-dire à forte contrainte temps réel). Le procédé est ainsi destiné à réduire le nombre de réveils du système en les synchronisant de façon à ne réveiller le système qu'une seule fois pour exécuter plusieurs actions qui auraient nécessité plusieurs réveils indépendants.

Lorsque le système est endormi, il ne peut être réveillé que par des évènements particuliers qui sont des expirations de temporisations venant à échéance et des interruptions extérieures au système, par exemple générées par un appui touche si l'appareil est muni d'un clavier. De façon générale on peut assimiler ces événements à des temporisations dont l'échéance est déterminée par la tâche ou l'activité du système qui l'a déclenchée. Ces temporisations sont automatiquement décrémentées même pendant les périodes d'endormissement du système lorsque l'horloge interne continue de fonctionner.

Selon une caractéristique essentielle de l'invention, il est prévu de fournir, au démarrage de chaque temporisation, une indication de précision concernant la date d'expiration de la temporisation. Cette indication est fournie à un module de gestion spécialisé qui centralise toutes ces données et qui calcule les dates d'expiration optimales de chaque temporisation en fonction de toutes les indications de précision qui lui sont communiquées. Ainsi, les dates d'expiration initialement spécifiées par chaque activité au moment du démarrage avec une indication de précision, sont recalculées par le module de gestion centralisée, pour diminuer le nombre de réveils du système.

Les étapes du procédé sont alors les suivantes :
- le bloc 10 représente une étape de temporisation pour armer au moins une temporisation ayant une date d'expiration déterminée affectée d'une indication de précision, en vue de déclencher une action future; l'indication de précision comprend une plage de temps, à l'intérieur de laquelle la temporisation est susceptible d'expirer,
- le bloc 11 représente une étape de synchronisation pour synchroniser les dates d'expiration des temporisations en fonction desdites indications de précision ; la date d'expiration de chaque temporisation est recalculée en fonction des indications de précisions de toutes les temporisations en cours afin d'affecter une même date d'expiration aux temporisations dont les plages de temps ont une intersection commune,
- le bloc 12 représente une étape d'endormissement pour couper l'alimentation du circuit pendant une période d'inactivité,
- le bloc 13 représente une étape de réveil déclenchée par l'expiration d'une temporisation pour alimenter à nouveau ledit circuit pendant une période d'activité.

Ce procédé général peut comporter des sous-étapes particulières dépendantes du système dans lequel il est mis en oeuvre.

Un exemple de réalisation de ce procédé va maintenant être décrit en détails à l'aide de la figure 2 représentant sur une échelle de temps allant de 0 à t, des plages de précision associées aux dates d'expiration prévues pour 4 temporisations T1 à T4. Ces plages sont schématisées par des intervalles de temps délimités par des crochets portant le numéro de la temporisation associée ainsi qu'une indication de début et de fin d'intervalle. Ainsi la plage de temps associée par exemple à T1 est délimitée par les crochets d1 et f1. Les flèches verticales pointent sur la date théorique d'expiration, spécifiée au démarrage de la temporisation, avant le calcul de la date effective par l'étape de synchronisation.

On remarque que les plages d'expiration des temporisations T1 et T2 ont une intersection délimitée par d2 et f1, et que les plages d'expiration des temporisations T3 et T4 ont une intersection délimitée par d3 et f3.

L'étape de synchronisation va donc consister à affecter une date d'expiration t12 commune à T1 et T2, cette date se trouvant dans l'intervalle [d2 ; f1] et une date d'expiration t34 commune à T3 et T4, cette date se trouvant dans l'intervalle [d3 ; f3].

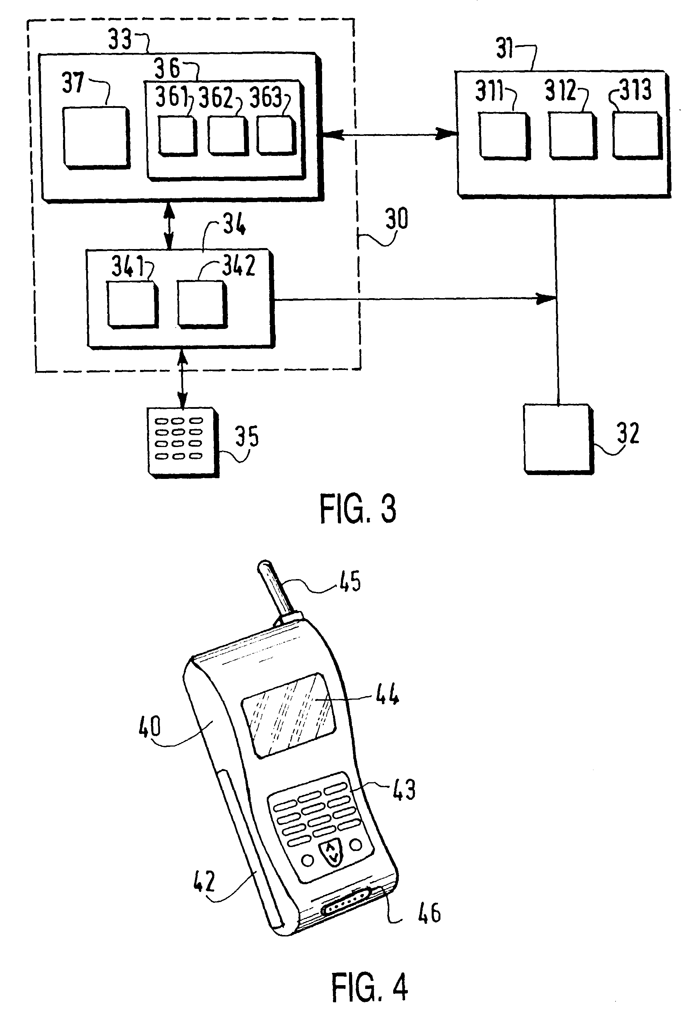

Le schéma de principe représenté à la figure 3 illustre un dispositif d'économie d'énergie 30 mettant en oeuvre le procédé décrit ci-dessus pour réduire la consommation d'énergie d'un système électronique 31 alimenté par un accumulateur 32.

Dans l'exemple représenté, le système 31 comprend trois applications ou activités distinctes 311, 312 et 313 pouvant chacune déclencher des temporisations susceptibles d'expirer pendant une période d'endormissement. Le dispositif d'économie d'énergie 30 est constitué d'un module de gestion 33 pour gérer les applications du système 31 et d'un module de gestion de l'alimentation 34. Un élément d'interface utilisateur 35 schématisant un clavier est également représenté. Le module de gestion 33 comprend un organe de gestion des temporisations 36 et un organe de contrôle 37.

Selon un mode de réalisation avantageux de l'invention, toutes les fonctions du module de gestion des applications 33 peuvent être exécutées par un noyau temps réel du type de ceux couramment utilisés dans les appareils électroniques embarqués.

Le dispositif 30 va maintenant être décrit plus en détails. L'organe de gestion des temporisations 36 est muni :
- de moyens de temporisation 361 commandés par les applications 311 à 313 pour armer des temporisation et spécifier leur date d'expiration,
- de moyens d'affectation 362 coopérant avec les moyens de temporisation 361 pour fournir une indication de précision à chaque temporisation, cette indication pouvant être mémorisée dans la structure de donnée associée à chaque temporisation, et
- de moyens de synchronisation 363 prenant en entrée les indications de précision de toutes les temporisations en cours et fournissant en sortie une date d'expiration effective pour chaque temporisation.

Le module de gestion de l'alimentation 34 comporte :
- des moyens d'endormissement 341 activés par l'organe de contrôle 35 pour couper l'alimentation 32 pendant une période d'inactivité, et
- des moyens de réveil 342 pouvant être déclenchés soit par l'expiration d'une temporisation soit par une interruption provenant de l'interface utilisateur 35 (notamment générée par un appui touche) pour reconnecter l'alimentation 32 en vue d'effectuer la tâche désignée par l'expiration de la temporisation ou de traiter l'interruption.

L'exemple d'équipement électronique embarqué représenté à la figure 4 est un radiotéléphone fonctionnant selon une norme de type GSM (de l'anglais Global System for Mobile Communication). Cependant l'invention peut être appliquée à tout autre appareil électronique embarqué dont la consommation en énergie doit être réduite et présentant de fortes contraintes temps réel.

Le boîtier 40 renferme un système électronique de fonctionnement du radiotéléphone imprimé sur une carte (non visible sur la figure). Il contient une batterie rechargeable et / ou interchangeable 42 dont le niveau de charge est contrôlé par un organe de gestion de batterie intégré au système. Une interface utilisateur constituée au minimum d'un clavier 43 et d'un écran 44 mais également de tout accessoire susceptible d'être connecté au radiotéléphone par l'intermédiaire d'un connecteur 46, permet de communiquer des informations d'entrée / sortie avec le système via une couche logicielle d'interface homme / machine qui génère des temporisations et des interruptions. La liste de ces accessoires n'est pas limitative, citons par exemple les plus courants : chargeur, connecteur pour ordinateur, kit automobile, kit mains-libres, etc. L'appareil comporte également une antenne d'émission / réception 45 pour échanger des signaux radioélectriques avec le réseau de radiotéléphonie. L'antenne 45 est reliée à une partie du système appelée interface radio ou couche L1 selon la norme GSM et gère l'activité radio du système.

La couche L1 est soumise à de très fortes contraintes temps réel puisqu'elle écoute en permanence les informations transmises sur les canaux radioélectriques par le réseau. C'est la couche la plus prioritaire du système. Les procédures déclenchée par la couche L1 sont synchronisées sur une horloge interne. Leur dates d'échéance, que l'on peut assimiler à des dates d'expirations selon l'invention, sont affectées d'une plage de précision réduite au minimum. En revanche, les contraintes de temps de la couche d'interface homme / machine et de la tâche exécutée par l'organe de contrôle de niveau de charge de la batterie sont moins strictes que celles de la couche L1.

Par conséquent, l'invention prévoit de synchroniser l'expiration des temporisations liées aux applications de l'interface homme / machine et de la tâche de gestion de batterie sur les dates d'échéance des procédures commandées par la couche L1, lorsque ces dates d'échéances sont inclues dans les plages de précision des applications.

## Revendications

1. Procédé d'économie d'énergie dans un système électronique alimenté par un accumulateur, ledit système ayant des périodes d'activité et d'inactivité successives, le procédé comprenant :
• une étape de temporisation pour armer des temporisations ayant des dates d'expiration déterminées,
• une étape d'endormissement pour couper l'alimentation du système pendant une période d'inactivité,
• une étape de réveil déclenchée par l'expiration de chaque temporisation pour alimenter à nouveau ledit système pendant une période d'activité,
caractérisé en ce que l'on affecte une indication de précision auxdites temporisations et en ce que lesdites dates d'expiration sont déterminées par une étape de synchronisation pour synchroniser l'expiration des temporisations en fonction desdites indications de précision.

2. Procédé selon la revendication 1, caractérisé en ce que ladite indication de précision comprend une plage de temps, à l'intérieur de laquelle la temporisation est susceptible d'expirer.

3. Procédé selon la revendication 2, caractérisé en ce l'étape de synchronisation consiste à affecter une même date d'expiration aux temporisations dont les plages de temps forment une intersection non vide.

4. Dispositif d'économie d'énergie pour réduire l'énergie d'alimentation consommée par un système électronique ayant des périodes d'activité et d'inactivité successives, le dispositif comportant :
• des moyens de temporisation pour armer des temporisations ayant des dates d'expiration déterminées,
• des moyens d'endormissement pour couper ladite alimentation pendant une période d'inactivité,
• des moyens de réveil déclenchés par l'expiration de chaque temporisation pour alimenter à nouveau ledit système pendant une période d'activité,
caractérisé en ce que ledit dispositif comporte :
• des moyens d'affectation coopérant avec les moyens de temporisation pour affecter une indication de précision auxdites temporisations,
• des moyens de synchronisation desdites dates d'expiration pour synchroniser l'expiration des temporisations en fonction desdites indications de précision.

5. Dispositif selon la revendication 4, caractérisé en ce que ladite indication de précision comprend une plage de temps à l'intérieur de laquelle la temporisation est susceptible d'expirer et en ce que lesdits moyens de synchronisation permettent d'affecter une même date d'expiration aux temporisations dont les plages de temps forment une intersection non vide.

6. Equipement électronique embarqué comprenant un système électronique ayant au moins une première activité à forte contrainte temps réel et une deuxième activité à moins forte contrainte temps réel et un dispositif d'économie d'énergie selon l'une des revendications 4 ou 5, lesdits moyens de temporisation étant prévus pour affecter auxdites première et deuxième activités des temporisations distinctes ayant une première et une deuxième date d'expiration déterminées,
caractérisé en ce que lesdits moyens de synchronisation sont prévus pour synchroniser ladite deuxième date d'expiration avec ladite première date d'expiration.

7. Equipement électronique selon la revendication 6, comportant une interface homme / machine,
caractérisé en ce ledit système est un système de radiocommunications conforme à une norme de type GSM (de l'anglais Global System for Mobile Communications) et en ce que ladite première activité correspond à l'activité de surveillance des canaux radioélectriques identifiée par une couche de type L1 selon ladite norme et en ce que ladite deuxième activité est générée par l'interface homme / machine.

8. Equipement électronique selon la revendication 6, comportant une batterie d'alimentation gérée par un organe de contrôle de niveau de charge de la batterie,
caractérisé en ce ledit système est un système de radiocommunications conforme à une norme de type GSM (de l'anglais Global System for Mobile Communication) et en ce que ladite première activité correspond à l'activité de surveillance des canaux radioélectriques identifiée par une couche de type L1 selon ladite norme et en ce que ladite deuxième activité est générée par l'organe de contrôle de niveau de charge de la batterie.
